# EUROPEAN PATENT APPLICATION

(11) **EP 2 589 506 A1**
(43) Date of publication of application: **08.05.2013**
(21) Application number: 11290516.1
(22) Date of filing: 07.11.2011
(51) Int. Cl.: B60G 15/06, F16C 19/06, F16C 33/60, F16F 9/54

(54) **Strut mount with rod bearing**

(71) Applicant: Aktiebolaget SKF, 41 550 Göteborg (SE)
(72) Inventor: Bussit, Sylvain, 37380 Monnaie (FR); Soudee, Jean-Marc, 37000 Tours (FR); Houdayer, Christophe, 37360 Semblancay (FR); Vidor, Désiré, 37300 Joue-Les-Tours (FR); Liverato, Yves-André, 37370 Saint Paterne Racan (FR)
(74) Representative: Kohl, Thomas

(57) **Abstract**

A strut mount comprises an outer peripheral housing (2), a spring receiving portion (3) adapted to support an end portion of a coil spring (200), at least one spring bearing (4) supporting the said spring receiving portion (3), and at least one rod bearing (6) fastened with an end (101) of a strut rod (100)

The at least one rod bearing (6) is provided with three rings (651, 652; 61; 115; 1111, 1112) defining a rolling chamber (69; 119) wherein rolling elements (70; 120) are implemented and have at least three contact points with the rings.

## Description

The invention relates to a strut mount absorbing vibrations from a strut rod and provided with a rod bearing permitting a reduced friction torque and higher axial and radial loads.

Vehicles such as an automobile and the like are equipped with suspension devices between a wheel and the vehicle body. Moreover suspension devices are provided with a strut mount disposed at an end portion of a strut rod. The strut mount also supports a coil spring arranged around with the strut rod.

A strut mount is provided with a spring bearing that supports an end of the coil spring via a spring receiving portion. The strut mount is also provided with a rod bearing fastened to an end of the strut rod.

The spring and rod bearings are each composed of an inner and an outer raceway defining between them a rolling chamber wherein rolling elements such as balls are implemented.

One object of the present invention is to provide an improved strut mount able to support high loads.

According to the invention, such a strut mount is characterized in that it comprises at least one spring bearing for supporting the coil spring and at least one rod bearing for supporting the strut rod, the said at least one rod bearing being provided with at least three rings defining a rolling chamber wherein rolling elements such as balls are implemented and have at least three contact points with the rings whereby a rolling element inserted in said rolling chamber has at least one contact point with each of the rings.

One cognition of our invention is as follows: A strut mount with a rod bearing as disclosed in this prior art allows a reduced friction torque for the rotating strut rod. However the balls inserted in the rod bearing of such designs have only two contact points with their associated raceways. Moreover only a limited reduced number of balls can be inserted according to the known assembly techniques. Therefore the assemblies disclosed in the cited prior art are not able to take high loads from the strut rod.

At least one ring arrangement of the rod bearing according to the invention is provided with at least two annular half-rings. Each annular half-ring has an axial portion provided with a half-recess complementing each other to form a raceway for the balls once the two half-rings are put together during the assembly or the installation of the rod bearing.

In the rest of this document, two half-rings will be said as "associated" when they are put together during the assembly or the installation of the rod bearing for combining their two half-recesses in order to form a raceway for the balls.

The first raceway defined by the two half-rings is associated with a second raceway facing the first raceway according to a plane parallel to the strut mount axis.

Then each ball inside the rolling chamber of the rod bearing has a first contact point with one of the half-recess of one half-ring, a second contact point with the other the half-recess of the other half-ring, and at least one contact point with the second raceway.

According to further aspects of the invention, which are advantageous but not compulsory, such a strut mount may incorporate one or several of the following features as long as there is no contradiction:
- The rod bearing second raceway is a concave groove formed in a radial portion of a one-part ring.
- The rod bearing second raceway is resulting from the combination of two annular half-rings, each annular half-ring having an axial portion provided with a half-recess. The combination of the two half-recesses of the two half-rings form a raceway for the balls once the two half-rings are put together during the assembly or the installation of the rod bearing.
- Two associated half-rings are separated axially one to the other by a gap extending perpendicularly to the rotational axis of the rod bearing.
- Two associated half-rings are axially in contact along a plane perpendicular to the rotational axis of the rod bearing.
- Two associated half-rings are a rotatable inner ring arrangement of the rod bearing.
- Two associated half-rings are a non-rotating outer ring arrangement of the rod bearing.
- The one-part ring is an inner ring of the rod bearing and is a rotatable element.
- The one-part ring is an outer ring of the rod bearing and is a non-rotating element.
- The rod bearing inner ring is fastened with an end of the strut rod.
- The rod bearing is supported in the strut mount by at least one maintain part made of a metallic sheet.
- The rod bearing outer ring has an outer axial portion being in axial contact with the maintain part.
- The rod bearing outer ring is provided with an upper and a lower radial portions, the said both radial portions being in radial contact with the maintain part.
- The lower radial portion of the rod bearing outer ring is maintained by at least one projecting radial portion of the maintain part, generated by plastic deformation, such as caulking, of the metallic sheet forming the maintain part against the lower radial portion of the rod bearing outer ring during the assembly process.
- The strut mount is provided with an elastomeric part disposed between an outer peripheral housing and the spring bearing on the one hand, and the maintain part on the other hand.
- The elastomeric part is provided with a through hole wherein the rod bearing is inserted.
- The maintain part is provided with at least one lower radial portion which is in radial contact with a lower radial portion of the elastomeric part of the strut mount.
- The maintain part is provided with at least one axial portion which is in axial contact in the elastomeric part hole with an axial portion of the elastomeric part of the strut mount.
- At least one attach element is provided with an upper radial portion which is in radial contact with at least one upper radial portion of the elastomeric part of the strut mount, the said at least one attach element cooperating with the maintain part in order to link them together.
- The attach element is provided with an axial portion connected to the upper radial portion, the said axial portion cooperating with the maintain part in order to link them together. The axial portion of the attach element is in axial contact with the elastomeric part.
- The axial portion of the attach element is provided on its lower end with at least one radially inwardly projecting portion and the axial portion of the maintain part is provided on its upper end by at least one radially outwardly projecting portion. The two radially inwardly and outwardly projecting portions of the attach element and the maintain part respectively cooperate in order to link the two elements together. The lower inwardly projecting portion of the attach element enters the upper outwardly projecting portion by elastically deformation of the two portions.
- The elastomeric part of the strut mount is mainly made of elastically deformable material for damping vibrations.
- The elastomeric part is provided with at least one reinforcement element, the elastic material of the elastomeric part being moulded over this at least one reinforcement element.
- The balls implemented in the spring bearing have, with respect to a direction perpendicular to the rotational axis of the spring bearing, an angular contact with the raceways forming the rolling chamber.

The present invention also concerns a suspension device comprising a strut mount as mentioned here above, which is supporting a strut rod and a coil spring on its lower end, and is fastened to a vehicle body on its upper end.

One advantage of such an assembly is that the rod bearing with balls having four contact points with the raceways permits higher axial and radial loads, such as 10 kN as axial load and 6 kN as radial load.

Another advantage of the use of two half-rings for constituting the inner and/or the outer ring of the rod bearing is the possibility to insert the maximum number of balls in the available space defined by the rolling chamber, allowing a higher support of axial and radial loads. It is possible only thanks to a new assembly process which comprises the following steps:
- A first half-ring and the one-part ring are arranged with the maintain part, the outer ring being in contact with the radial portion of the maintain part;
- The balls are inserted in the rolling chamber;
- The second half-ring is disposed above the balls and arranged with its associated half-ring;
- The projecting radial portion of the maintain part is generated by plastic deformation of the metallic sheet forming the maintain part against the lower radial portion of the rod bearing outer ring;
- The arrangement formed by the rod bearing and the maintain part is inserted in the hole of the elastomeric part, the lower radial portion of the maintain part being in radial contact with the lower radial portion of the elastomeric part;
- The attach element is inserted in the hole of the elastomeric part, the attach element being linked to the maintain part and the upper radial portion of the attach element being in radial contact with the upper radial portion of the elastomeric part; and
- An end of the strut rod is inserted through the bore of the rod bearing inner ring and fastened to the assembly by fixation means.

Further advantages, features and details of the invention will be described with reference to the appended and non-limiting drawings wherein:
- Figure 1 shows in a sectional view a strut mount according to a first embodiment of the invention;
- Figure 2 is a detailed sectional view of the rod bearing according to a second embodiment of the invention;
- Figure 3a and 3b are perspective views of the rod bearing according to the second embodiment of the invention; and
- Figure 4 a detailed sectional view of the rod bearing according to a third embodiment of the invention.

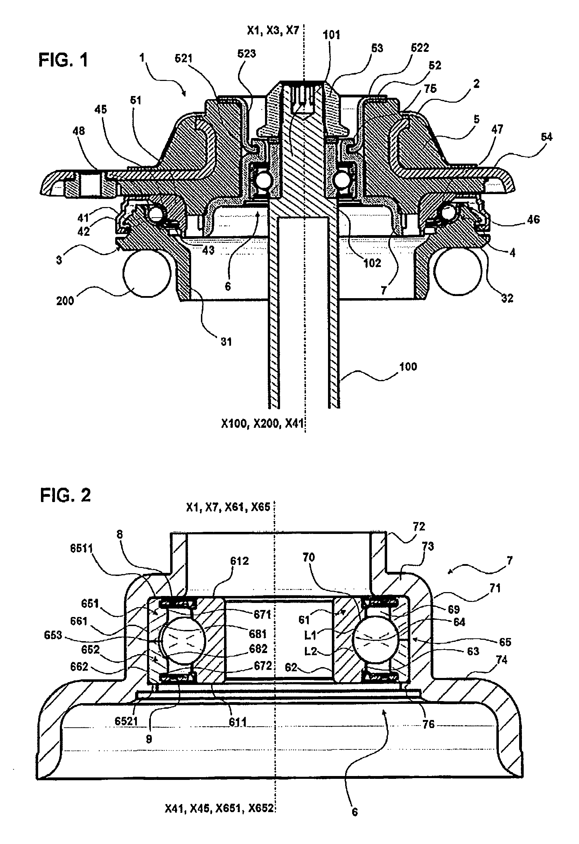

In FIG. 1 is shown a strut mount 1 according to the first embodiment of the present invention. We note X1 the rotational axis of the strut mount. The strut mount is provided on its upper side with an outer peripheral housing 2 made of a metallic material having a tapered form. The outer peripheral housing 2 is fastened with a vehicle body (not shown).

The vehicle is provided with a suspension device comprising a strut rod 100 and a coil spring 200 arranged around the strut rod 100. The strut rod 100 ant the coil spring 200 have rotational axis X100 and X200 respectively.

An end portion of the coil spring 200 is supported by a spring cup or spring receiving portion 3 of the strut mount 1. The spring receiving portion 3 is disposed on the inner side of the strut mount, axially at the opposite of the outer peripheral housing 2. The spring receiving portion 3 is annular of rotational axis X3. In normal use, the axis X1, X3 and X200 are superimposed.

The spring receiving portion 3 is provided with an axial flange 31 and a radial flange 32 connected together. The axial flange 31 extends parallely to the axis X3. The radial flange 32 extends radially outwardly in a direction perpendicular to the axis X3. The end portion of the coil spring 200 fits between the axial and radial flanges so as to surround the axial flange 31 of the spring receiving portion3.

The spring receiving portion 3 is supported in the strut mount 1 by a spring bearing 4. The spring bearing 4 is equipped with an outer ring 41 made of a metallic tapered sheet. The outer ring 41 is annular of rotational axis X41 and is a rotatable ring. The outer ring 41 has an outer portion 42 fastened with the radial flange 32 of the spring receiving portion 3. The outer ring 41 has also an inner portion 43 provided with a concave groove (not referenced) forming a first raceway.

The spring bearing 4 is also equipped with an inner ring 45 made of a metallic sheet. The inner ring 45 is a non-rotating ring and is annular of rotational axis X45 which is superimposed with the axis X41 in normal use. The inner ring 45 has an inner portion 46 fastened with an upper cup 51 which bear against an elastomeric part 5. The elastomeric part 5 enables a vibration damping and is fastened with the outer peripheral housing 2. The inner ring 45 has also an inner portion 47 provided with a concave groove (not referenced) forming a second raceway.

As illustrated in FIG. 1, the first and second raceways form a rolling chamber wherein rolling elements such as balls 48 are inserted. Advantageously the balls 48 may be maintained by a cage (not shown). In normal use, the spring bearing 4 axes X41 and X45 are superimposed with the strut mount axis X1.

In cross section, the outer and inner rings 41 and 45 and their associated raceways face each other according to a plane inclined with the strut axis X1. The balls 48 inserted in the spring bearing 4 have an angular contact with the first and second raceways forming the rolling chamber.

The axial flange 31 of the spring receiving portion 3 and the outer and inner rings 41 and 45 respectively of the spring bearing 4 define each a through hole wherein the strut rod 100 is inserted.

The strut mount 1 supports an end 101 of the strut rod 100 of the vehicle suspension device. The strut rod end 101 is provided with a shoulder 102 defining a small diameter end portion which is engaged into a rod bearing 6.

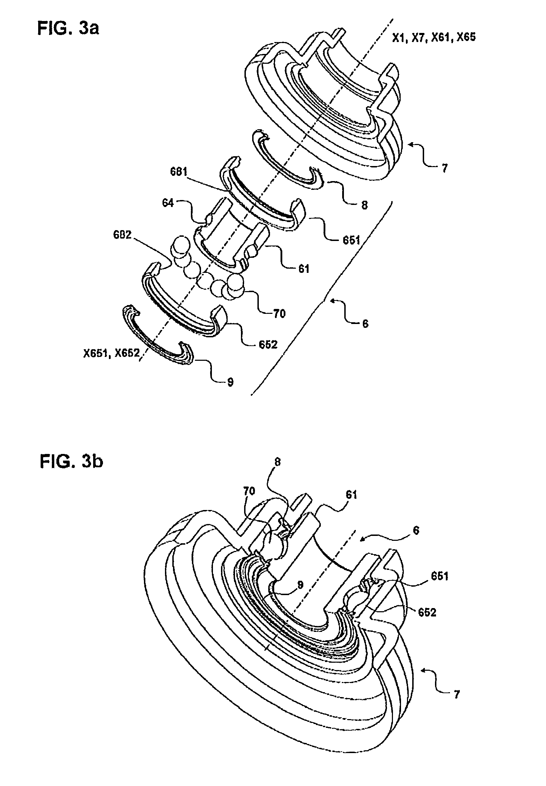

As shown in FIG. 1 to 3a and 3b, the rod bearing 6 is equipped with an inner ring 61. The inner ring 61 is made of one single part. The inner ring 61 is annular of rotational axis X61 and is a rotatable ring. The inner ring 61 has an inner axial portion 62 fastened with the strut rod end 101 via an axial contact. The inner ring 61 has also an outer axial portion 63 provided with a concave groove 64 forming a first raceway.

The rod bearing 6 is also equipped with an outer non-rotating ring 65 made in two distinct parts: an upper half-ring 651 and a lower half-ring 652. The upper and lower half-rings 651 and 652 respectively are annular of rotational axis X651 and X652 respectively.

The upper and lower half-rings 651 and 652 are separated by a gap 653 perpendicular to the rotational axes X651 and X652.

The upper and lower half-rings 651 and 652 respectively have each an outer axial portion 661 and 662 respectively inserted in a maintain part 7 of the strut mount 1. The upper and lower half-rings 651 and 652 respectively have also each an inner axial portion 671 and 672 respectively provided with a half-recess 681 and 682 respectively. The combination of the two half-recesses 681 and 682 forms a second raceway for the rod bearing 6 in the assembled state as shown in FIG. 2.

The combination of the groove 64 and the two half-recesses 681 and 682 forms a rolling chamber 69 wherein balls 70 are inserted. In normal use, the spring bearing 6 axes X61, X651 and X652 are superimposed with the strut mount axis X1 and the strut rod axis X100.

Two annular sealing means 8 and 9 are disposed between the upper half-ring 651 and the inner ring 61, and between the lower half-ring 652 and the inner ring 62 respectively. The rolling chamber 69 is sealed against contamination from the outside by the two sealing means 8 and 9.

Such a rod bearing 6 allows at least three contact points for the balls 70 as shown by the dashed lines L1 and L2. Each ball 70 has a contact point with the half-recess 681 of the upper half-ring, another contact point with the half-recess 682 of the lower half-ring 652 and at least one contact point with the concave groove 64 of the inner ring 61. Depending on the concave groove 64 geometry, the ball can have two contact points with the inner ring 61. Moreover, the maximum quantity of balls can be inserted in the rolling chamber 69 available space, the assembly process being possible only thanks to the two half-rings 651 and 652.

The maintain part 7 of the strut bearing 1 is made of a metallic material and is annular of rotational axis X7. The maintain part 7 has a first axial portion 71 which forms a through hole wherein the rod bearing is inserted allowing an axial contact with the outer axial portions 661 and 662. On the opposite side, the first axial portion 71 is also in axial contact with the elastomeric part 5 which forms a through hole wherein the maintain part 7 is inserted.

The maintain part 7 has a second axial portion 72 wherein fixation means 53 can be inserted for fastening the strut rod 100 to the rod bearing 6.

The shoulder 102 of the strut rod end 101 is in radial contact with a lower radial portion 611 of the inner ring 61 of the rod bearing 6. The fixation means on the other side are fastened with the strut rod end 101 and are in radial contact with an upper radial portion 612 of the inner ring 61 of the rod bearing 6.

The two axial portions 71 and 72 extend parallely to the strut mount 1 axis X1 and are connected together by a first radial portion 73. The first radial portion 73 is in radial contact with an upper radial portion 6511 of the upper half-ring 651 in order to maintain it. The rod bearing 6 is hold axially in the maintain part 7 by a projecting radial portion 76 provided on the maintain part 7. The projecting radial portion 76 is generated by plastic deformation, for instance by caulking, of the metal sheet forming the maintain part 7 against a lower radial portion 6521 of the lower half-ring 652 during the assembly process.

The maintain part 7 has a second radial portion 74 in radial contact with a lower radial portion of the elastomeric part 5. The second radial portion 74 extends outwardly from and perpendicularly to the strut mount axis X1.

The elastomeric part 5 is made of elastically deformable material and is disposed between the outer peripheral housing 2 and the spring bearing 4 on the one hand, and the maintain part 7 on the other hand.

The elastomeric part is also provided with a reinforcement element 54, the elastic material of the elastomeric part 5 being overmoulded upon this reinforcement element 54.

According to the first embodiment of the invention disclosed in FIG. 1, the second axial portion 72 of the maintain part 7 can be provided with an outwardly projecting portion 75 that comes into contact with an attach element 52. The element 52 advantageously obtained from a metallic sheet, has an inwardly projecting portion 521 adapted to cooperate with the outwardly projecting portion 75. The attach element 52 is provided with a radial portion 522 in radial contact with the upper portion of the elastomeric part 5. The radial portion 522 and the inwardly projecting portion 521 are linked together by an axial portion 523 in axial contact with the elastomeric part 5.

The combination of the two radial portions 522 and 74 of the element 52 and the maintain part 7 respectively which are linked together enables the maintain of the rod bearing inside the strut mount against the elastomeric part 5.

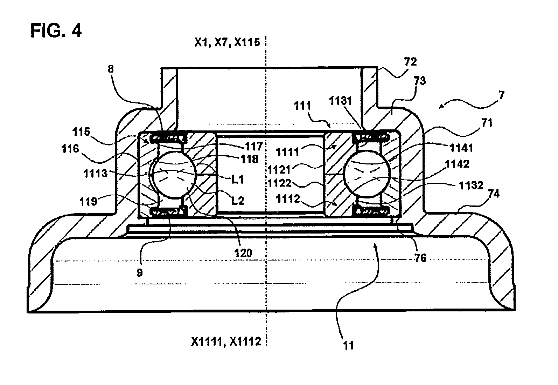

In FIG. 4 is shown a third embodiment of the present invention. The same elements as those already described are indexed by the same references. The comfort ring 11 is equipped with an inner rotatable ring 111 made in two distinct parts: an upper half-ring 1111 and a lower half-ring 1112. The upper and lower half-rings 1111 and 1112 respectively are annular of rotational axis X1111 and X1112 respectively. The upper and lower half-rings 1111 and 1112 are separated one to the other by a gap 1113 perpendicular to the rotational axes X1111 and X1112.

The upper and lower half-rings 1111 and 1112 respectively have each an inner axial portion 1121 and 1122 respectively fastened with the end 101 of the strut rod 100 via an axial contact. The upper and lower half-rings 1111 and 1112 respectively have also each an outer axial portion 1131 and 1132 respectively provided with a half-recess 1141 and 1142 respectively. The two associated upper and lower half-rings 1111 and 1112 respectively form a first raceway for the rod bearing 6 in the assembled state as shown in FIG. 4.

The rod bearing 11 is also equipped with an outer non-rotating ring 115 which is annular of rotational axis X115. The outer ring 115 is made of one single part. In normal use, the axes X115, X1111 and X1112 and the strut rod axis 100 are superimposed. The outer ring 115 has an outer axial portion 116 fastened with the maintain part 7 via an axial contact. The outer ring 115 has also an inner axial portion 117 provided with a concave groove 118 forming a second raceway.

The combination of the groove 118 and the two half-recesses 1141 and 1142 forms a rolling chamber 119 wherein balls 120 are inserted. In normal use, the spring bearing 11 axes X115, X1111 and X1112 are superimposed with the strut mount axis X1. According to another embodiment not shown in the Figures, the inner and outer rings of the rod bearing 6 can each be provided by two associated half-rings such as 651, 652 and 1111, 1112. In this case, it is possible to obtain a four contact points bearing by dimensioning the four half-rings, and in particular their raceways, in a way known from the prior art.

The present invention also concerns a suspension device comprising a strut mount 1 as mentioned here above, which is supporting a strut rod 100 and a coil spring 200 on its lower end, and is fastened to a vehicle body on its upper end.

The present invention also concerns an assembly process which comprises the following steps:
- A first half-ring and the one-part ring are arranged with the maintain part 7, the outer ring being in contact with the radial portion 73 of the maintain part 7. Alternatively, two upper-half rings are disposed with the maintain part 7.
- The balls are inserted in the rolling chamber against the half-recess(es) and/or the concave groove.
- The last half-ring(s) is(are) disposed above the balls and arranged with its associated half-ring.
- The projecting radial portion 76 of the maintain part 7 is generated by plastic deformation against the lower radial portion of the outer ring.
- The arrangement formed by the rod bearing 6 and the maintain part 7 is inserted in the hole of the elastomeric part, the lower radial portion 74 of the maintain part 7 being in radial contact with the lower radial portion of the elastomeric part 5.
- The attach element 52 is inserted in the hole of the elastomeric part 5, the attach element 52 being linked to the maintain part 7 and the upper radial portion 522 of the attach element 52 being in radial contact with the upper radial portion of the elastomeric part 5; and
- The strut rod end 101 is inserted inside the inner ring of the rod bearing 6 and fastened to the assembly by fixation means 53 such as a nut engaged on a threaded portion of the strut rod end 101.

### Nomenclature

- 1.: Strut mount
- 2.: Outer peripheral housing
- 3.: Spring cup
- 4.: Spring bearing
- 5.: Elastomeric part
- 6.: Rod bearing
- 7.: Maintain part
- 8.: Annular sealing means
- 9.: Annular sealing means
- 11.: Rod bearing
- 31.: Axial flange
- 32.: Radial flange
- 41.: Outer ring
- 42.: Outer portion
- 43.: Inner portion
- 45.: Inner ring
- 46.: Inner portion
- 47.: Outer portion
- 48.: Balls
- 51.: Upper cup
- 52.: Attach element
- 53.: Fixation means
- 54.: Reinforcement element
- 61.: Inner ring
- 62.: Inner axial portion
- 63.: Outer axial portion
- 64.: Concave groove
- 65.: Outer ring
- 69.: Rolling chamber
- 70.: Balls
- 71.: First axial portion
- 72.: Second axial portion
- 73.: First radial portion
- 74.: Second radial portion
- 75.: Outwardly projecting portion
- 76.: Projecting radial portion
- 100.: Strut rod
- 101.: Strut rod end
- 102.: Shoulder
- 111.: Inner ring
- 115.: Outer ring
- 116.: Outer axial portion
- 117.: Inner axial portion
- 118.: Concave groove
- 119.: Rolling chamber
- 120.: Balls
- 200.: Coil spring
- 521.: Inwardly projecting portion
- 522.: Radial portion
- 523.: Axial portion
- 611.: Lower radial portion
- 612.: Upper radial portion
- 651.: Upper half-ring
- 652.: Lower half-ring
- 653.: Gap
- 661.: Outer axial portion
- 662.: Outer axial portion
- 671.: Inner axial portion
- 672.: Inner axial portion
- 681.: Half-recess
- 682.: Half-recess
- 1111.: Upper half-ring
- 1112.: Lower half-ring
- 1113.: Gap
- 1121: Inner axial portion
- 1122.: Inner axial portion
- 1131.: Outer axial portion
- 1132.: Outer axial portion
- 1141.: Half-recess
- 1142.: Half-recess
- 6511.: Upper radial portion
- 6521.: Lower radial portion

- X1.: Rotational axis of the strut mount
- X3.: Rotational axis of the spring cup
- X7: Rotational axis of the maintain part
- X41.: Rotational axis of the spring bearing outer ring
- X45.: Rotational axis of the spring bearing inner ring
- X61.: Rotational axis of the rod bearing inner ring
- X65.: Rotational axis of the rod bearing outer ring
- X100.: Rotational axis of the strut rod
- X115.: Rotational axis of the rod bearing outer ring
- X200.: Rotational axis of the coil spring
- X651: Rotational axis of the rod bearing upper half-ring
- X652: Rotational axis of the rod bearing lower half-ring
- X1111: Rotational axis of the rod bearing upper half-ring
- X1112: Rotational axis of the rod bearing lower half-ring

## Claims

1. A strut mount (1) comprising at least one rod bearing (6) of rotational axis (X1) and fastened with an end (101) of a strut rod (100), **characterized in that** the said at least one rod bearing (6) being provided with at least three rings (651, 652; 61; 115; 1111, 1112) defining a rolling chamber (69; 119) wherein rolling elements (70; 120) are implemented and have at least three contact points with the rings whereby a rolling element inserted in said rolling chamber has at least one contact point with each of the rings.

2. A strut mount according to claim 1, wherein it also comprises an outer peripheral housing (2), a spring receiving portion (3) adapted to support an end portion of a coil spring (200) and at least one rod bearing (4) supporting the said spring receiving portion (3).

3. A strut mount according to any of the preceding claims, wherein the at least one rod bearing (6) is provided with at least two annular half-rings (651, 652; 1111; 1112) having each an axial portion with a half-recess (681, 682; 1141, 1142) complementing each other to form a raceway for the rolling elements (70; 120) once the two half-rings are put together during the assembly or the installation of the rod bearing.

4. A strut mount according to claim 3, wherein two half-rings (651, 652; 1111, 1112) which are associated in the rod bearing (6) are separated axially one to the other by a gap (653) extending perpendicularly to the rotational axis (X6) of the rod bearing (6).

5. A strut mount according to claim 3, wherein two half-rings (651, 652; 1111, 1112) which are associated in the rod bearing (6) are axially in contact along a plane perpendicular to the rotational axis (X6) of the rod bearing (6) .

6. A strut mount according to any of the preceding claims, wherein the rod bearing (6) is provided with one one-part ring (61; 115) with a concave groove (64; 118)

7. A strut mount according to any of the preceding claims, wherein the rod bearing (6) is supported in the strut mount (1) by at least one maintain part (7) made of a metallic sheet.

8. A strut mount according to claim 7, wherein a lower radial portion of the rod bearing (6) is maintained by at least one projecting radial portion (76) of the maintain part (7), the said projecting radial portion (76) being generated by plastic deformation of the metallic sheet forming the maintain part (7).

9. A strut mount according to any of the claims 2 to 8 wherein an elastomeric part (5) is disposed between the outer peripheral housing (2) fastened with a vehicle body and the spring bearing (4) on one hand, and the maintain part (7) on the other hand.

10. A strut mount according to claim 9, wherein the elastomeric part (5) is provided with a through hole wherein the rod bearing (6) is inserted.

11. A strut mount according to claim 8 or 9, wherein the at least one maintain part (7) is provided with at least one radial portion (74) which is in axial contact with at least one lower radial portion of the elastomeric part (5).

12. A strut mount according to any of the claims 9 to 11, wherein at least one attach element (52) is implemented in the through hole of the elastomeric part (5), the said at least one attach element (52) being provided with at least one upper radial portion (522) in radial contact with at least one upper radial portion of the elastomeric part (5), and the said at least one attach element (52) cooperating with the maintain part (7) in order to link them together.

13. A strut mount according to claim 12, wherein the at least one attach element (52) is provided with at least one radially inwardly projecting portion (521) and the maintain part (7) is provided with at least one radially outwardly projecting portion (75), both portions (75, 521) cooperating together in order to link the attach element (52) to the maintain part (7).

14. Assembly process of a strut mount comprising the following steps:
- A first half-ring (651; 1111) and a one-part ring (61; 115) are arranged with a maintain part (7), an outer ring being in contact with a radial portion (73) of the maintain part (7). Alternatively, two upper-half rings are disposed with the maintain part (7).
- Rolling elements (70; 120) are inserted in a rolling chamber (69; 119) against half-recess(es) and/or a concave groove of the rod bearing rings.
- A second half-ring(s) (652; 1112) is(are) disposed above the rolling elements (70; 120) and arranged with its associated half-ring (651; 1111).

15. Assembly process according to claim 14 comprising the additional step wherein a projecting radial portion (76) of the maintain part (7) is generated by plastic deformation against a lower radial portion of the rod bearing.

16. Assembly process according to any of the claims 14 or 15 comprising the following additional steps:
- The arrangement formed by the rod bearing (6) and the maintain part (7) is inserted in a hole of an elastomeric part, a lower radial portion (74) of the maintain part (7) being in radial contact with a lower radial portion of the elastomeric part (5).
- An attach element (52) is inserted in the hole of the elastomeric part (5), the attach element (52) being linked to the maintain part (7) and an upper radial portion (522) of the attach element (52) being in radial contact with an upper radial portion of the elastomeric part (5); and
- A strut rod end (101) is inserted inside the inner ring of the rod bearing (6) and fastened to the assembly by fixation means (53).
